Europäisches Patentamt

European Patent Office

Office européen des brevets

(11) Publication number: 0 358 936
A2

## EUROPEAN PATENT APPLICATION

(21) Application number: 89114556.7

(51) Int. Cl.5: G01B 11/06

(22) Date of filing: 07.08.89

(30) Priority: 17.08.88 JP 203997/88

(43) Date of publication of application:
21.03.90 Bulletin 90/12

(84) Designated Contracting States:
DE FR GB IT

(71) Applicant: Dainippon Screen Mfg. Co., Ltd.
1-1, Tenjinkitamachi Teranouchi-Agaru
4-chome Horikawa-Dori
Kamikyo-ku Kyoto 602(JP)

(72) Inventor: Kondo, Noriyuki Dainippon Screen
Mfg. Co., Ltd.
1-1, Tenjinkitamachi Teranouchi-Agaru
4-chome
Horikawa Dori Kamikyo-ku Kyoto(JP)

(74) Representative: Goddar, Heinz J., Dr. et al
FORRESTER & BOEHMERT
Widenmayerstrasse 4/I
D-8000 München 22(DE)

(54) Method of and apparatus for measuring film thickness.

(57) The present invention provides a method of and an apparatus for measuring the thickness of a first thin film (46) which is the uppermost layer of a sample (5) formed by two or more stacked thin films (42, 44, 46). According to the invention, light ($I'$) which is transmitted through the first thin (46) film but absorbed by a second thin film (44) positioned directly under the first thin film is applied to the sample (5) and the spectrum of light ($R_1'$, $R_2'$) reflected by the sample is detected to correctly obtain thickness of the first thin film on the basis of the detected spectrum

### FIG. 2B

EP 0 358 936 A2

## Method of and Apparatus for Measuring Film Thickness

BACKGROUND OF THE INVENTION

Field of the Invention

The present invention relates to a method of and an apparatus for measuring film thickness, and more particularly, it relates to a method of and an apparatus for measuring thickness of a thin film which is an uppermost layer of a sample having two or more stacked thin films.

Description of the Prior Art

In general, interferometry is widely employed in order to measure thickness of a transparent thin film such as a silicon oxide film formed on a silicon substrate, for example, in a non-contact manner in an inspection step of a semiconductor fabricating process or the like.

According to such a method, visible light is applied to a sample having a transparent thin film to be measured and spectrum of light reflected by the sample is detected to measure thickness of the transparent thin film on the basis of the spectrum.

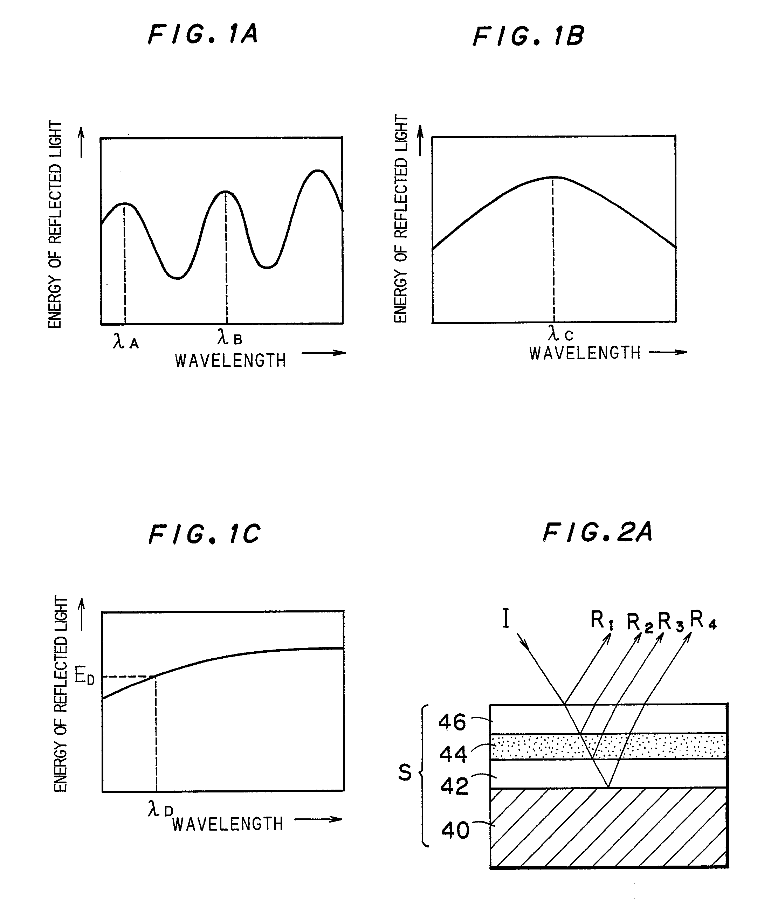

Figs. 1A to 1C illustrate three types of general spectra of light reflected by samples having a transparent thin film to be measured respectively, which are irradiated with visible light. According to the interferometry, thickness of the trasparent thin film of the sample is obtained in response to the type of an actually detected spectrum, in the following manner:

(1) First Type

Fig. 1A shows the type of a spectrum measured when thickness of a thin film to be measured is relatively large.

As shown in Fig. 1A, a plurality of extreme values are clearly observed in the spectrum. When such a spectrum is measured, two appropriate extreme values (wavelengths $\lambda_A$ and $\lambda_B$, for example) are selected to calculate the thickness of the thin film to be measured on the basis of difference ($\lambda_B - \lambda_A$) between the selected extreme values.

(2) Second Type

The cycle of a spectrum is increased as thickness of a transparent thin film to be measured is reduced. Therefore, when the thickness of a thin film to be measured is relatively small, a spectrum having one extreme value (wavelength $\lambda_C$) is detected as shown in Fig. 1B, for example. Since correlation is observed between the extreme value (wavelength $\lambda_C$) and the thickness of the thin film, the thickness of the thin film can be obtained on the basis of the extreme value (wavelength $\lambda_C$) when the spectrum shown in Fig. 1B is detected.

(3) Third Type

When thickness of a transparent thin film to be measured is further reduced, no extreme value can be seen and energy of light reflected by a sample having the thin film to be measured monotonously varies with a wavelength $\lambda$, as shown in Fig. 1C. In this case, the thickness of the thin film cannot be obtained by the aforementioned methods since the spectrum has no extreme value. However, since constant correlation is recognized between the energy of reflected light and the thickness of the thin film under such a condition that the wavelength is constant, the thickness of the thin film can be obtained through such correlation. When the spectrum shown in Fig. 1C is detected, energy $E_D$ of reflected light at a wavelength $\lambda_D$ is measured to obtain the thickness of the thin film on the basis of this value and correlation between the energy and the thickness obtained in advance of measurement of the spectrum.

2

In recent years, a semiconductor device having multilayer structure has been fabricated with development in semiconductor technique, and there is a demand for correct measurement of thickness of a thin film which is of the uppermost layer of such a semiconductor device.

According to the aforementioned conventional film thickness measuring method, however, it is difficult to accurately measure the thickness of the thin film which is of the uppermost layer for the following reason: Fig. 2A is a sectional view showing a semiconductor device having multilayer structure. As shown in Fig. 2A, a semiconductor device S comprises a silicon substrate 40, which is provided thereon with a silicon oxide film 42, a polysilicon film 44 and a silicon oxide film 46 in this order.

When visible light I is applied to the semiconductor device S having such multilayer structure, light $R_1$ reflected by the silicon oxide film 46 which is the uppermost layer of the semiconductor device S, light $R_2$ reflected by an interface between the silicon oxide film 46 and the polysilicon film 44, light $R_3$ reflected by an interface between the polysilicon film 44 and the silicon oxide film 42 and light $R_4$ reflected by an interface between the silicon oxide film 42 and the substrate 40 are guided toward a prescribed direction, respectively.

When the thickness of the silicon oxide film 46 is measured through the aforementioned interferometry, information required for such measurement is the reflected light $R_1$ and the reflected light $R_2$, while the remaining reflected light $R_3$ and the reflected light $R_4$ serve as disturbance noises, to reduce accuracy of measurement. Therefore, it is necessary to eliminate influence by the reflected light $R_3$ and $R_4$ in order to accurately obtain the thickness of the silicon oxide film 46 through the interferometry.

However, intensity levels of the reflected light $R_3$ and $R_4$ are not constant since the surface state of the polysilicon film 44 and optical constants thereof such as an index of refraction, absorptivity etc., are varied with the method of and conditions of manufacturing the polysilicon film 44, and hence it is difficult to selectively remove only noise components caused by such reflected light $R_3$ and $R_4$. Thus, it has been generally difficult to accurately measure thickness of the thin film which is of the uppermost layer of the semiconductor device having the multilayer structure shown in Fig. 2A by the interferometry.

SUMMARY OF THE INVENTION

The present invention is directed to a method of and an apparatus for measuring thickness of a thin film which is an uppermost layer of a sample having two or more stacked thin films.

According to the inventive method of measuring film thickness, light which is transmitted through the first thin film but absorbed by a second thin film located directly under the first thin film is applied to the sample to detect the spectrum of light reflected by the sample, to thereby obtain the thickness of the first thin film on the basis of the detected spectrum.

And an apparatus comprises: means for applying light being transmitted through the first thin film but absorbed by a second thin film located directly under the first thin film to the sample; means for detecting spectrum of light reflected by the sample; and means for obtaining thickness of the first thin film on the basis of the spectrum detected by the detecting means.

Accordingly, a principal object of the present invention is to provide film thickness measuring method and apparatus which can measure thickness of a thin film which is an uppermost layer of a sample having multilayer structure.

These and other objects, features, aspects and advantages of the present invention will become more apparent from the following detailed description of the present invention when taken in conjunction with the accompanying drawings.

BRIEF DESCRIPTION OF THE DRAWINGS

Figs. 1A to 1C illustrate typical patterns of spectra measured according to interferometry, respectively;

Figs. 2A and 2B illustrate examples of semiconductor devices having multilayer structure, respectively;

Fig. 3 is an explanatory diagram for illustrating the principle of the present invention;

Fig. 4 illustrates another example of a sample having multilayer structure;

Fig. 5 illustrates a spectrum which is detected when light of 200 nm to 600 nm is applied to the semiconductor device shown in Fig. 2A;

Fig. 6 is a block diagram showing an embodiment of a film thickness measuring apparatus according to the present invention; and

Fig. 7 is a flow chart showing a method of measuring film thickness by the apparatus shown in Fig. 6.

## DESCRIPTION OF THE PREFERRED EMBODIMENT

### A. Outline of the Invention

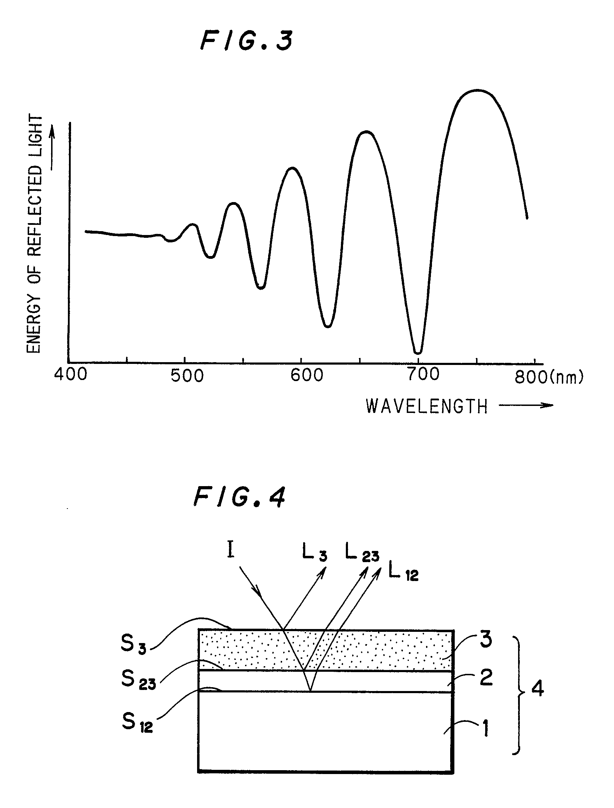

Fig. 3 illustrates the spectrum of light reflected by a semiconductor device 4 shown in Fig. 4, which is irradiated with light I in a wavelength range of 400 nm to 800 nm. The semiconductor device 4 comprises a silicon substrate 1, a silicon oxide film 2 of 100 nm in thickness formed on the silicon substrate 1 and a polysilicon film 3 of 530 nm in thickness formed on the silicon oxide film 2.

As understood from Fig. 3, the amplitude is reduced as the wavelength is shortened, and substantially zeroized in a wavelength range shorter than about 460 nm, i.e., in the ultraviolet region. The following consideration can be made from this: In the visual region, a waveform of the spectrum has a relatively large amplitude since light $L_3$ reflected by a surface $S_3$ of the polysilicon film 3 interferes with light $L_{23}$ reflected by an interface $S_{23}$ between the silicon oxide film 2 and the polysilicon film 3 and light $L_{12}$ reflected by an interface $S_{12}$ between the silicon substrate 1 and the silicon oxide film 2. In the ultraviolet region, on the other hand, substantially no light is reflected by the interfaces $S_{12}$ and $S_{23}$ to go out from the surface of the polysilicon film 3 since the polysilicon film 3 absorbs ultraviolet light going therein. Therefore, the light $L_3$ reflected by the surface of the polysilicon film 3 is hardly subjected to interference, and hence a waveform of the spectrum has substantially no amplitude. It has been verified through various experiments that the wavelength causing no amplitude is shifted to a longer wavelength side with respect to 460 nm as the thickness of the polisilicon film 3 is increased in excess of 530 nm.

It can be considered from the aforementioned case that, when a thin film to be measured is formed on a film such as the aforementioned polysilicon film 3 absorbing the light in the ultraviolet region, the thickness of the thin film to be measured can be obtained substantially with no influence by a film formed under the film such as the polysilicon film 3, by performing film thickness measurement through the light of the ultraviolet region. It is to be noted that the thin film to be measured provided on the polysilicon film 3 must transmit ultraviolet light, as a matter of course.

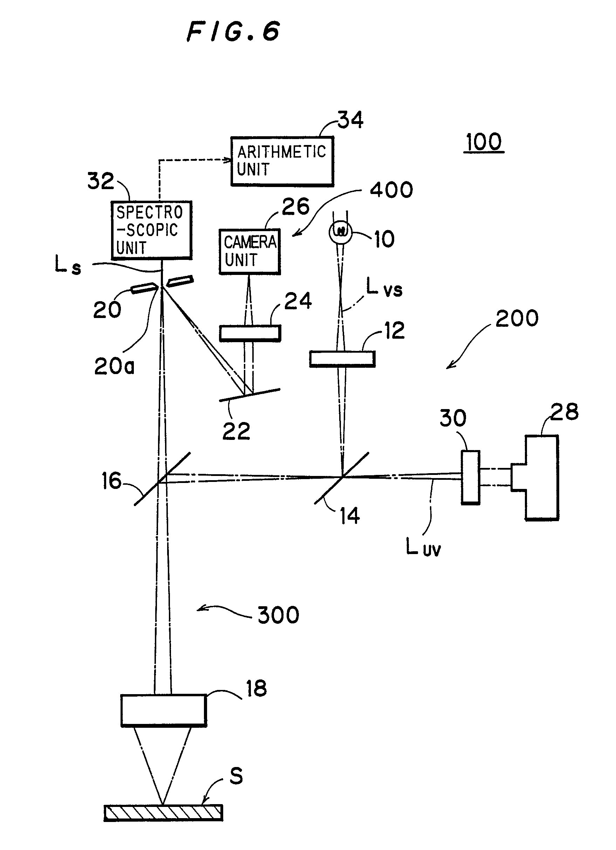

Fig. 5 illustrates the spectrum of light reflected by the semiconductor device S shown in Fig. 2A, comprising a silicon substrate 40 provided thereon with a silicon oxide film 42 of 100 nm in thickness, a polysilicon film 44 of 400 nm in thickness and a silicon oxide film 46 of 250 nm in thickness in this order, which is irradiated with light I in a wavelength range of 200 nm to 600 nm. As obvious from Fig. 5, a waveform of the spectrum is complicated in the visible region. This is because the polysilicon film 44 hardly absorbs light in the visible region but transmits such light. Namely, when the light I containing light components of the visible region is incident upon the semiconductor device S, the light component of the visible region advance not only through the silicon oxide film 46 but through the polysilicon film 44 and the silicon oxide film 42, to go out from the surface of the silicon oxide film 46 as the light $R_3$ reflected by the interface between the polysilicon film 44 and the silicon oxide film 42 and the light $R_4$ reflected by the interface between the silicon oxide film 42 and the silicon substrate 40, as shown in Fig. 2A. Thus, the spectrum is complicated due to influence by the reflected light components $R_3$ and $R_4$.

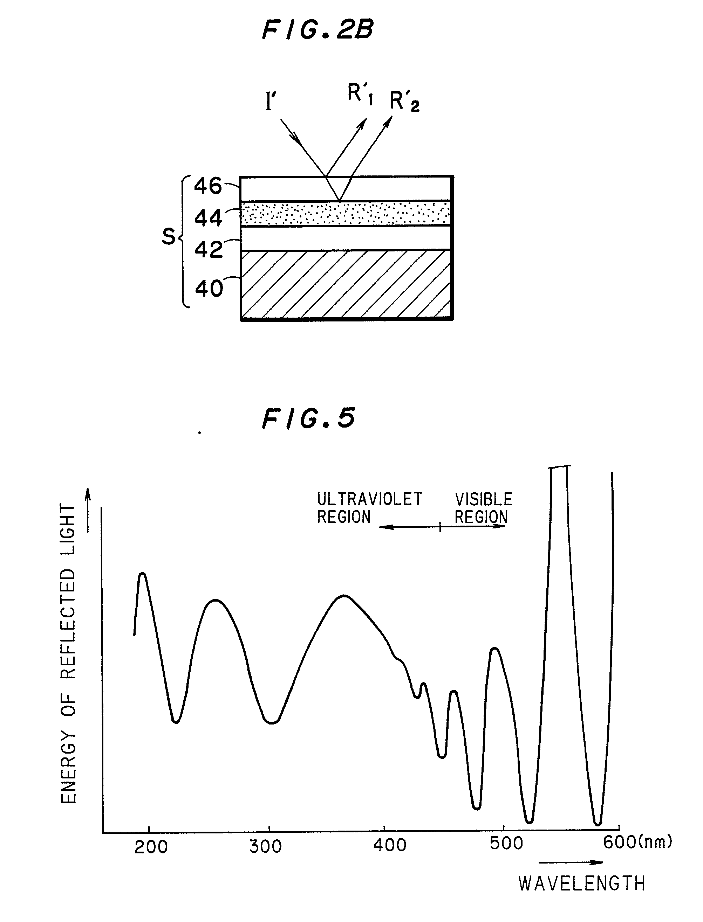

In the ultraviolet region, on the other hand, a waveform of the spectrum is simple as compared with that in the visible region. This is because the polysilicon film 44 absorbs almost all light components in the ultraviolet region, as hereinabove described. When light containing a light component $I'$ in the ultraviolet region is incident upon a semiconductor device S as shown in Fig. 2B, only light $R_2'$ reflected by an interface between a silicon oxide film 46 and a polysilicon film 44 is guided toward the surface of the silicon oxide film 46 while a light component going in the polysilicon film 44 is absorbed therein. In the ultraviolet region, therefore, the spectrum is simplified since the same is determined by only light interference between light $R_1'$ reflected by the silicon oxide film 46 and the aforementioned light $R_2'$.

As understood from this result, it is not easy to analyze the spectrum of the reflected light in the visible region of wavelengths longer than about 460 nm since reflected light components $R_1$ to $R_4$ interfere with each other in the same. However, a readily analyzable spectrum can be obtained in the ultraviolet region of wavelengths shorter than about 460 nm, with no influence by the multiple interference. Therefore, thickness of the uppermost layer (silicon oxide film 46) of the semiconductor device S having multilayer structure can be measured in high accuracy by utilizing the light in the ultraviolet region.

Although the thickness of the uppermost layer (silicon oxide film 46) is measured through such properties that the uppermost layer (silicon oxide film 46) transmits ultraviolet light while the layer (polysilicon film 44) located directly under the uppermost layer absorbs the ultraviolet light in the above, the materials of the thin films and the wavelength range of the employed light are not restricted to the above. In other words, light of a specific wavelength range having permeability with respect to the uppermost layer but having no permeability with respect to a layer located directly under the uppermost layer may be applied to a sample having multilayer structure to measure the spectrum of light reflected by the sample, to thereby obtain the thickness of the uppermost layer.

B. Embodiment

Fig. 6 is a schematic block diagram showing a film thickness measuring apparatus according to the present invention. As shown in Fig. 6, a film thickness measuring apparatus 100 is formed by an illumination optical system 200, a microscopic optical system 300, a reflecting mirror 20, a spectroscopic unit 32, a monitoring optical system 400, an arithmetic unit 34 and a control part (not shown).

The illumination optical system 200 comprises a light source 10 such as a halogen lamp emitting visible light, a lens 12 and a shutter mirror 14 which can reciprocate in a direction perpendicular to the plane of the figure. Visible light $L_{VS}$ outgoing from the light source 10 is guided toward the microscopic optical system 300 through the lens 12 and the shutter mirror 14. The illumination optical system 200 also comprises another light source 28 emitting ultraviolet light and another lens 30, to be capable of guiding ultraviolet light $L_{UV}$ toward the microscopic optical system 300 in place of the visible light $L_{VS}$. The light source 28 may be formed by a member which emits light of a specific ultraviolet region, such as a deuterium lamp, a mercury lamp, an ultraviolet laser irradiator or a xenon lamp.

The microscopic optical system 300 is formed by a half mirror 16 and a mirror type image formation element 18.

Therefore, when the shutter mirror 14 is on an optical axis as shown in Fig. 6, the visible light $L_{VS}$ outgoing from the light source 10 is applied to the surface of a sample S having a thin film (not shown) to be measured through the lens 12, the shutter mirror 14, the half mirror 16 and the mirror type image formation element 18. When the shutter mirror 14 is evacuated from the optical axis, on the other hand, the ultraviolet light $L_{UV}$ outgoing from the light source 28 is applied to the surface of the sample S through the lens 30, the half mirror 16 and the mirror type image formation element 18.

A beam reflected by the surface of the sample S is enlargely imaged in a position close to the reflecting mirror 20 through the image formation element 18 and the half mirror 16.

The reflecting mirror 20 is provided with a pinhole 20a. Within the reflected beam, therefore, reflected light $L_S$ passing through the pinhole 20a is incorporated in the spectroscopic unit 32.

The spectroscopic unit 32 is formed by a diffraction grating (not shown) for separating the reflected light $L_S$ into its spectral components and a light detector (not shown) for detecting the spectrum from the diffraction grating. Therefore, the spectrum of the light $L_S$ incorporated in the spectroscopic unit 32 is detected by the spectroscopic unit 32, and a signal corresponding to the spectrum of the light $L_S$ is supplied to the arithmetic unit 34 from the spectroscopic unit 32. The arithmetic unit 34 has a memory (not shown), and is structured to calculate the thickness of the thin film to be measured of the sample S on the basis of the signal outputted from the spectroscopic unit 32 and data stored in the memory.

Within the reflected beam, on the other hand, light reflected by the reflecting mirror 20 is incident upon the monitoring optical system 400, and imaged in a camera unit 26 through the mirror 22 and the image formation lens 24. Thus, an enlarged image of the surface of the measurement sample S is picked up by the camera unit 26 and projected on a CRT (not shown). Therefore, confirmation of the measuring position of the measurement sample S and focusing thereof can be performed on the basis of this enlarged image.

The apparatus 100 has the control part (not shown), so that the entire apparatus is controlled by signals outputted from the control part. Although the visible light is employed in order to confirm the film thickness measuring position of the measurement sample S and to focus the optical system in the aforementioned apparatus 100, the light source 10, the lens 12 and the shutter mirror 14 are not requisite elements of the present invention since the surface of the sample can alternatively be observed by ultraviolet light.

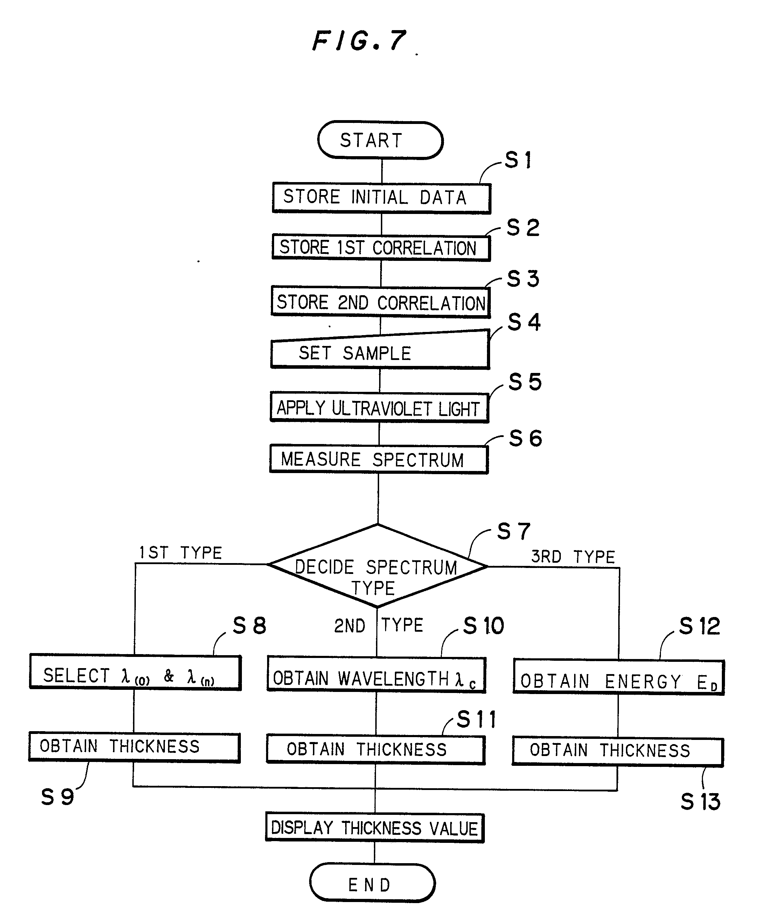

Fig. 7 is a flow chart showing the procedure of measuring film thickness by the film thickness measuring apparatus 100. It is assumed here that the semiconductor device S shown in Fig. 2A is the target of measurement.

In advance of film thickness measurement by the film thickness measuring apparatus 100, an operator enters optical constants, such as the indices of refraction and absorption coefficients, of the silicon oxide films 42 and 46, the polysilicon film 44 and the silicon substrate 40 etc. through a keyboard (not shown). Entered initial data are stored in the memory of the arithmetic unit 34 (step S1). Within the arithmetic unit 34, correlation (hereinafter referred to as "first correlation") between thickness d of the silicon oxide film 46 and an extreme value $\lambda_C$ (Fig. 1B) of the spectrum is obtained from the data by arithmetic processing, and stored in the memory (step S2). Further, correlation (hereinafter referred to as "second correlation") between the thickness d and energy of reflected light at a specific wavelength $\lambda_D$ (Fig. 1C) is obtained from the data and stored in the memory (step 53).

Upon completion of the aforementioned prepreparation, the operator sets the semiconductor device S, which has a silicon oxide film 46 to be measured, in a prescribed position as shown in Fig. 6 (step S4). At this time, the light source 10 is turned on in accordance with a command from the operator, and an image of the surface of the semiconductor device S picked up by the camera unit 26 is projected on the CRT. The operator can confirm the position of the semiconductor device S and focus the same on the basis of the image projected on the CRT, to thereby correctly specify the measuring position.

Thereafter the operator supplies a measurement start command to the control part, so that steps S5 to S14 are executed in response to commands from the control part. The light source 28 is turned on and the shutter mirror 14 is evacuated from the optical axis of the ultraviolet light $L_{UV}$, so that the ultraviolet light $L_{UV}$ outgoing from the light source 28 is applied to the surface of the semiconductor device S (step S5).

The ultraviolet light $L_{UV}$ applied to the surface of the semiconductor device S is reflected by the surface of the semiconductor device S, and the spectrum of the reflected light $L_S$ is measured by the spectroscopic unit 32 (step S6). Thereafter a decision is made at the step S7 as to which one of the aforementioned three types the spectrum belongs to. The thickness of the silicon oxide film 46 is obtained in the following manner, in response to the type of the spectrum:

(1) First Type

When it is decided in the step S7 that the spectrum measured by the spectroscopic unit 32 is of the type shown in Fig. 1A, an arbitrary extreme value (wavelength $\lambda_{(0)}$) and an n-th extreme value (wavelength $\lambda_{(n)}$) (n: arbitrary integer exceeding 1) from the arbitrary extreme value are obtained from the spectrum shown in Fig. 1A (step S8). A refraction index $N_{(0)}$ of the silicon oxide film 46 at the wavelength $\lambda_{(0)}$ and a refraction index $N_{(n)}$ of the silicon oxide film 46 at the wavelength $\lambda_{(n)}$ are read from the memory of the arithmetic unit 34, to obtain the thickness d on the basis of the following expression:

$$d = \frac{n}{4} \cdot \frac{1}{\dfrac{N_{(0)}}{\lambda_{(0)}} - \dfrac{N_{(n)}}{\lambda_{(n)}}} \qquad \dots \ (1)$$

When the reflectance of the polysilicon film 44 is varied in the ultraviolet region, read errors may be caused with respect to the extreme values to reduce accuracy in measurement. In order to prevent such errors, the extreme values may be read while avoiding a wavelength range in which the reflectance of the polysilicon film 44 is varied, for example.

(2) Second Type

When it is decided in the step S7 that the spectrum measured by the spectroscopic unit 32 is of the type shown in Fig. 1B in the ultraviolet region, a wavelength $\lambda_C$ of its extreme value is obtained from the spectrum shown in Fig. 1B (step S10), and thereafter the thickness d of the silicon oxide film 46 is obtained from the first correlation stored in the memory of the arithmetic unit 34 and the wavelength c obtained at the step S10 (step S11).

(3) Third Type

When it is decided in the step S7 that the spectrum measured by the spectroscopic unit 32 is of the type shown in Fig. 1C in the ultraviolet region, energy $E_D$ of reflected light $L_S$ at a specific wavelength $\lambda_D$ obtained from the spectrum shown in Fig. 1C (step $S_{12}$), and thereafter the thickness d of the silicon oxide

6

film 46 is obtained from the second correlation stored in the memory of the arithmetic unit 34 and the energy $E_D$ obtained at the step S12 (step S13).

Finally, the thickness d of the silicon oxide film 46 obtained in the aforementioned manner is displayed on a display unit (not shown) (step S14).

As hereinabove described, the ultraviolet light $L_{UV}$ is applied to the surface of the semiconductor device S to measure the spectrum of the light $L_S$ reflected by the surface of the semiconductor device S, whereby only influence by the light reflected by the silicon oxide film 46 of the semiconductor device S and the light reflected by the interface between the silicon oxide film 46 and the polysilicon film 44 is reflected in the spectrum. Thus, the thickness of the silicon oxide film 46 can be correctly obtained from the spectrum measured by the spectroscopic unit 32.

The method for obtaining the thickness of the silicon oxide film 46 from the measured spectrum is not restricted to the above but can be carried out in various modifications.

Although the first correlation is obtained by arithmetic processing on the basis of the optical constants of the semiconductor device S etc., the first correlation may be obtained by applying ultraviolet light to a sample whose thickness is already known and thereafter measuring an extreme value (wavelength $\lambda_C$ of reflected light in the ultraviolet region. Similarly to the first correlation, the second correlation may be obtained by applying ultraviolet light to a sample whose thickness is already known and thereafter measuring energy of reflected light at a specific wavelength $\lambda_D$ in the ultraviolet region.

While the above embodiment has been described with reference to a method of measuring the thickness of the semiconductor device S by the film thickness measuring apparatus 100, thickness of the uppermost layer of a sample other than the semiconductor device S can also be measured in a similar manner to the above.

Although the present invention has been described and illustrated in detail, it is clearly understood that the same is by way of illustration and example only and is not to be taken by way of limitation. The spirit and scope of the present invention should be limited only by the terms of the appended claims.

The features disclosed in the foregoing description, in the claims and/or in the accompanying drawings may, both, separately and in any combination thereof, be material for realising the invention in diverse forms thereof.

**Claims**

1. A method of measuring the thickness of a first thin film (46) which is an uppermost layer of a sample (5) formed by two or more stacked thin films (42, 44, 46), said method comprising: a first step of applying light (I') to said sample (5); a second step of detecting the spectrum of light ($R_1'$, $R_2'$) reflected by said sample; and a third step of obtaining the thickness of said first thin film (46) on the basis of said spectrum detected in said second step; said method being characterised in that said light (I') applied to said sample (5) in said first step has a wave length such that said light (I') is transmitted through said first thin film (46) but is absorbed by a second thin film (44) located directly under said first thin film (46).

2. A method in accordance with claim 1, comprising an initial step of obtaining correlation date showing a correlation between the character of the light reflected by said sample (5) and the thickness value of said first thin film (46); and obtaining the thickness of said first thin film (46) in said third step on the basis of said correlation data obtained in said initial step and said spectrum detected in said second step.

3. A method in accordance with claim 2, wherein said initial step comprises storing optical constants of said first and second thin films (46, 44) in a memory means (34) and obtaining said correlation data by arithmetically processing said optical constants stored in said memory means (34).

4. A method in accordance with claim 3, wherein said optical constants include indices of refraction and absorption coefficients.

5. A method in accordance with claim 4, wherein said correlation data comprises correlation data showing a correlation between the energy value of light ($R_1'$, $R_2'$) reflected by said sample (5) and thickness value of said first thin film (46).

6. A method in accordance with claim 4 or 5, wherein said correlation data comprises correlation data showing a correlation between the thickness value of said first thin film (46) and an extreme value of the spectrum of light ($R_1'$, $R_2'$) reflected by said sample (5).

7. A method in accordance with any preceding claim, wherein the wave length of said light (I'), applied to said sample (5) in said first step lies in the ultraviolet region.

8. An apparatus for measuring the thickness of a first thin film (46) which is an uppermost layer of a sample (5) formed by two or more stacked thin films (42, 44, 46), said apparatus comprising: means (200, 350) for applying light ($L_{VS}$, $L_{UV}$) to said sample; means (32) for detecting the spectrum of light ($L_S$) reflected by said sample (5); and means (34) for obtaining the thickness of said first thin film (46) on the basis of said spectrum detected by said detecting means (32); said apparatus being characterised in that said light applying means (200, 300) comprises means (28, 30, 14) for applying to said sample (5) light ($L_{UV}$) having a wave length such that said light ($L_{UV}$) is transmitted through said first thin film (46) but is absorbed by a second thin film (44) located directly under said first thin film (46).

9. An apparatus in accordance with claim 8, wherein said light applying means (200, 300) includes a lamp (28) for applying light ($L_{UV}$) which has a wave length in the ultraviolet region to said sample (5),.

10. An apparatus in accordance with claim 9, wherein said lamp (28) is a deuterium lamp.

11. An apparatus in accordance with claim 9, wherein said lamp (28) is a xenon lamp.

## FIG. 1A

ENERGY OF REFLECTED LIGHT ↑

$\lambda_A$   $\lambda_B$

WAVELENGTH →

## FIG. 1B

ENERGY OF REFLECTED LIGHT ↑

$\lambda_C$

WAVELENGTH →

## FIG. 1C

ENERGY OF REFLECTED LIGHT ↑

$E_D$

$\lambda_D$ WAVELENGTH →

## FIG. 2A

I   $R_1$ $R_2$ $R_3$ $R_4$

46
44
S   42
40

## *FIG.2B*

## *FIG.5*

## *FIG.3*

## *FIG.4*

# FIG.6

# FIG.7